# EUROPÄISCHE PATENTSCHRIFT

(11) **EP 2 133 371 B1**
(45) Veröffentlichungstag und Bekanntmachung des Hinweises auf die Patenterteilung: **14.09.2011**
(21) Anmeldenummer: 09009845.0
(22) Anmeldetag: 19.09.2007
(51) Int. Cl.: C08F 220/18, C09D 5/08

(54) **Lackschichtbildendes Korrosionsschutzmittel mit guter Haftung und Verfahren zu dessen stromfreier Applikation**
Coatingforming anti-corrosion agent with good adhesion and process for its non-electric application
Agent anti-corrosion formant une couche avec bonne adhérence et son application sans courant électrique

(30) Priorität: 13.11.2006 DE 102006053291
(43) Veröffentlichungstag der Anmeldung: 16.12.2009
(62) Teilanmeldung aus: 07818234.2
(73) Patentinhaber: BASF Coatings GmbH, 48165 Münster (DE)
(72) Erfinder: Dornbusch, Michael, 58513 Lüdenscheid (DE); Austrup, Elke, 59334 Nordkirchen (DE); Hintze-Brüning, Horst, 48165 Münster (DE)
(74) Vertreter: Leifert & Steffan

(56) Entgegenhaltungen:
- EP-A- 1 217 094
- DE-A1- 10 126 651
- US-A- 5 567 761

## Beschreibung

Verfahren und Beschichtungsmittel zur stromfreien Korrosionsschutzbeschichtung verschiedener Metallsubstrate sind bekannt. Sie bieten im Vergleich zur anodischen oder kathodischen Tauchlackierung (ATL beziehungsweise KTL), bei welchen das Anlegen elektrischer Spannungen notwendig ist, insbesondere den Vorteil des einfacheren und preiswerteren Prozesses sowie der kürzeren Prozeßzeit. Insbesondere lassen sich mit den stromfreien Verfahren Hohlräume in beziehungsweise Kanten an den zu beschichtenden Substraten besser beschichten als mit Verfahren, bei denen das Anlegen elektrischer Spannungen notwendig ist.

Bei der stromfreien Korrosionsschutzbeschichtung, auch ACC-Verfahren (Autophoretic Chemical Coating) genannt, werden in der Regel Polymerisate, beispielsweise Emulsionspolymerisate enthaltend Acrylate oder Styrol/Butadien, eingesetzt, die anionisch stabilisiert sind. Gegenüber den vorgenannten ATL- und KTL-Verfahren weisen die ACC-Verfahren jedoch den Nachteil auf, daß die abgeschiedenen Schichten Fehlstellen aufweisen, die das Substrat deutlich korrosionsanfälliger machen. Daher werden solche mittels ACC-Verfahren abgeschiedenen Schichten in der Regel durch Nachspülen mit chromhaltigen wäßrigen Beschichtungsmitteln bearbeitet, um den Korrosionsschutz an den Fehlstellen zu verbessern. In jüngerer Zeit hat es sich jedoch herausgestellt, daß chromhaltige Beschichtungsmittel große Probleme bei der Umweltverträglichkeit aufweisen sowie als hochgradig gesundheitsgefährdend einzustufen sind. Daher ist man bestrebt, Chrom in Korrosionsschutzbeschichtungen vollständig zu ersetzen.

In der Folge der Entwicklung chromfreier Beschichtungsmittel wurde weiterhin festgestellt, daß ACC-Beschichtungsmittel enthaltend Salze der Lanthanid- sowie der d-Elemente sowie eine organische filmbildende Komponente ebenfalls einen sehr guten, den chromhaltigen Beschichtungsmitteln vergleichbaren Korrosionsschutz gewährleisten.

In WO-A-01/86016 wird ein Korrosionsschutzmittel beschrieben, das eine Vanadium-Komponente und eine weitere Komponente enthält, die mindestens ein Metall ausgewählt aus der Gruppe Zirkon, Titan, Molybdän, Wolfram, Mangan und Cer enthält. Nachteilig bei Korrosionsschutzmitteln gemäß WO-A-01/86016 ist die Tendenz der aus dem Substrat gebildeten Metallionen durch die abgeschiedene Korrosionsschutzschicht zu wandern, da die Polymerisate zu einer mangelhaften Filmbildung führen.

In WO-A-99/29927 wird ein chromfreies wäßriges Korrosionsschutzmittel beschrieben, das als Komponenten Hexafluoro-Anionen von Titan(IV) und/oder Zirkon(IV), Vanadiumionen, Übergangsmetallionen sowie Phosphor- und/oder Phosphonsäure enthält. Nachteilig bei Korrosionsschutzmitteln gemäß WO-A-99/29927 ist die Tendenz der aus dem Substrat gebildeten Metallionen durch die abgeschiedene Korrosionsschutzschicht zu wandern, da die Polymerisate zu einer mangelhaften Filmbildung führen, sowie die Verwendung von ökologisch kritischen Substanzen, wie insbesondere Flusssäure oder Fluoride.

WO-A-96/10461 beschreibt ein wäßriges Korrosionsschutzmittel, das als Komponenten Anionen mit einem Zentralatom, ausgewählt aus der Gruppe Titan, Zirkon, Hafnium, Silizium. und mindestens 4 Fluoratomen als Liganden und eine organische Polymerdispersion enthält. Von Nachteil bei der Erfindung gemäß WO-A-96/10461 ist, daß bei der Abscheidung des Korrosionsschutzmittels auf der Substratoberfläche die Polymerdispersionspartikel ausflocken und eine geringe Kontaktfläche zur Oberfläche ausbilden. Weiterhin haben die Latexpartikel den Nachteil, bei der Diffusion in Hohlräume oder an Kanten von dreidimensional ausgeprägten Substraten im Vergleich zu molekulardispers verteilten Polymerisaten eine geringere Wanderungsgeschwindigkeit zu haben. Zudem werden Schichten einer Dicke zwischen 1 Mikrometer und 1 mm ausgebildet, was einen entsprechenden Materialbedarf pro Flächeneinheit des zu beschichtenden Substrats bedingt. Weiterhin nachteilig ist die Tendenz der aus dem Substrat gebildeten Metallionen durch die abgeschiedene Korrosionsschutzschicht zu wandern sowie die Verwendung von ökologisch kritischen Substanzen, wie insbesondere Flusssäure oder Fluoride.

DE-A-37 27 382 umfaßt chromfreie wäßrige Dispersionen von Addukten von Carbonsäuren und Isocyanaten an Epoxide, welche zur autophoretischen Beschichtung metallischer Oberflächen geeignet sind. Solche Dispersionen weisen in dispergierter Form einem Teilchendurchmesser von weniger als 300, bevorzugt zwischen 100 und 250 nm auf und können nach Abscheidung auf der Metalloberfläche bei Temperaturen zwischen 60 und 200 °C vernetzt werden. Auch solche Latexpartikel haben den Nachteil, bei der Diffusion in Hohlräume oder an Kanten von dreidimensional ausgeprägten Substraten im Vergleich zu molekulardispers verteilten Polymerisaten eine geringere Wanderungsgeschwindigkeit zu haben. Zudem werden Schichten einer Dicke zwischen 1 Mikrometer und 1 mm ausgebildet, was einen entsprechenden Materialbedarf pro Flächeneinheit des zu beschichtenden Substrats und eine Neigung zur Rissbildung bei der Trocknung bedingt. Weiterhin nachteilig ist die Tendenz der aus dem Substrat gebildeten Metallionen durch die abgeschiedene Korrosionsschutzschicht zu wandern sowie die Verwendung von ökologisch kritischen Substanzen, wie insbesondere Flusssäure oder Fluoride.

In DE-A-103 30 413 werden Beschichtungsmittel beschrieben, welche zur Beschichtung metallischer Oberflächen geeignet sind und Caprolactam-modifizierte Polyisocyanate auf der Basis von Polyethyleniminen enthalten können. Die Beschichtungsmittel können mittels Tauchlackierung aufgebracht werden und weisen nach der Trocknung Dicken zwischen 1 und 300 Mikrometer auf. Solchermaßen hergestellt Schichten weisen ebenfalls einen hohen Materialbedarf auf und neigen beim Trocknen zur Rissbildung.

### Aufgabe und Lösung

Im Lichte des vorgenannten Standes der Technik, war es die Aufgabe der Erfindung, ein ökologisch weitgehend unbedenkliches Korrosionsschutzmittel zu finden, welches mittels eines technisch einfach durchführbaren Prozesses auf das zu schützende Substrat aufgebracht werden kann. Insbesondere sollte das Korrosionsschutzmittel die Wanderung der aus dem Substrat gebildeten Metallionen weitgehend unterbinden sowie gut an Kanten und in Hohlräume des Substrats abgeschiedenen werden. Weiterhin sollte insbesondere die Neigung zur Rissbildung beim Trocknen der Schicht möglichst gering gehalten werden. Desweiteren sollte der Einfluß von Fremdmetallionen möglichst gering gehalten werden und mit vergleichsweise geringem Materialeinsatz ein wirksamer Korrosionsschutz erzielt werden. Insbesondere sollte der Zugang polarer korrodierender Substanzen, wie besonders korrodierende Salze zur Oberfläche des Metallsubstrats wirksam verhindert werden. Weiterhin sollte das Konversionsschutzmittel für möglichst viele unterschiedliche Metallsubstrate einen wirksamen Schutz entwickeln und weitgehend unabhängig vom Redoxpotential des zu beschichtenden Substrats sein.

Im Lichte der vorgenannten Aufgaben wurde ein wässriges Beschichtungsmittel gefunden, welches ein wasserdispergierbares und/oder wasserlösliches Polymerisat P mit einem Gradienten in der Konzentration von kovalent gebundenen hydrophilen Gruppen HG entlang der Polymerhauptkette enthält, wobei das Polymerisat P weiterhin kovalent gebundenene Liganden A aufweist, welche mit den bei der Korrosion des Substrats freigesetzten Metallionen und/oder mit der Substratoberfläche Chelate bilden, sowie weiterhin vernetzende funktionelle Gruppen B aufweist, welche mit sich selbst, mit weiteren funktionellen Gruppen B' des Polymerisats P und/oder mit weiteren funktionellen Gruppen B und/oder B' an Vernetzern V kovalente Bindungen ausbilden können.

Weiterhin wurde ein Verfahren zur autophoretischen Applikation eines wässrigen Beschichtungsmittels für metallische Substrate mit einem guten Korrosionsschutz gefunden, welches ein wasserdispergierbares und/oder wasserlösliches Polymerisat P mit einem Gradienten in der Konzentration von kovalent gebundenen hydrophilen Gruppen HG entlang der Polymerhauptkette enthält, wobei das Polymerisat P weiterhin kovalent gebundenene Liganden A aufweist, welche mit den bei der Korrosion des Substrats freigesetzten Metallionen und/oder mit der Substratoberfläche Chelate bilden, sowie weiterhin vernetzende funktionelle Gruppen B aufweist, welche mit sich selbst, mit weiteren funktionellen Gruppen B' des Polymerisats P und/oder mit weiteren funktionellen Gruppen B und/oder B' an Vernetzern V kovalente Bindungen ausbilden können, wobei die Dicke des Beschichtungsmittels nach der autophoretischen Applikation zwischen 5 und 900 nm beträgt.

In einer weiteren bevorzugten Ausführungsform des erfindungsgemäßen Verfahrens wird das Substrat vor Abscheidung des erfindungsgemäßen Korrosionsschutzmittels in einem weiteren vorgeschalteten Verfahrensschritt mit einem Korrosionsschutzmittel K vorbehandelt.

### Beschreibung der Erfindung

### Das erfindungsgemäße Beschichtungsmittel

Die wasserdispergierbaren und/oder wasserlöslichen Polymerisate P des erfindungsgemäßen Beschichtungsmittels weisen einen Gradienten in der Konzentration von kovalent gebundenen hydrophilen Gruppen HG entlang der Polymerhauptkette auf und tragen Liganden A, welche mit den bei der Korrosion des Substrats freigesetzten Metallionen Chelate bilden, sowie vernetzende funktionelle Gruppen B, die mit sich selbst und/oder mit weiteren funktionellen Gruppen C an Vernetzern V kovalente Bindungen ausbilden können.

Im Sinne der Erfindung wasserdispergierbar oder wasserlöslich bedeutet, daß die Polymerisate P in der wäßrigen Phase Aggregate mit einem mittleren Teilchendurchmesser von < 50, bevorzugt < 35 und besonders bevorzugt < 20 nm ausbilden beziehungsweise molekulardispers gelöst sind. Damit unterscheiden sich solche Aggregate in ihrem mittleren Teilchendurchmesser maßgeblich von Dispersionsteilchen, wie sie beispielsweise in DE-A-37 27 382 oder WO-A-96/10461 beschrieben werden. Molekulardispers gelöste Polymerisate P weisen in der Regel Molekulargewichte von < 100.000, bevorzugt < 50.000, besonders bevorzugt < 20.000 Dalton auf. Die Größe der Aggregate bestehend aus Polymerisat P kann vorzugsweise in an sich bekannter Weise durch Einführung von hydrophilen Gruppen HG am Polymerisat P bewerkstelligt werden.

Wesentlich für die Erfindung ist, dass die hydrophilen Gruppen HG einen Gradienten in ihrer Konzentration entlang der Polymerhauptkette bilden. Der Gradient ist durch ein Gefälle in der räumlichen Konzentration der hydrophilen Gruppen entlang der Polymerhauptkette definiert. Solchermaßen aufgebaute Polymerisate P sind zur Micellbildung im wässrigen Medium befähigt und weisen eine Oberflächenaktivität an der Oberfläche des zu beschichtenden Substrats auf, das heißt, die Grenzflächenenergie des erfindungsgemäßen Beschichtungsmittels an der zu beschichtenden Oberfläche wird reduziert.

Der Gradient wird vorzugsweise durch geeignete Anordnung monomerer Einheiten, welche das Polymer aufbauen und welche mit hydrophile Gruppen und/oder Gruppen, bei welchen hydrophile Gruppen HG erzeugt werden können, tragen, in an sich bekannter Weise erzeugt.

Bevorzugte hydrophile Gruppen HG am Polymerisat P sind ionische Gruppen wie insbesondere Sulfat-, Sulfonat-, Sulfonium-, Phosphat-, Phosphonat-, Phosphonium-, Ammonium- und/oder Carboxylatgruppen sowie nicht-ionische Gruppen, wie insbesondere Hydroxyl-, primäre, sekundäre und/oder tertiäre Amin-, Amidgruppen und/oder oligo- oder polyalkoxy-Substituenten, wie vorzugsweise ethoxylierte oder propoxylierte Substituenten, welche mit weiteren Gruppen verethert sein können. Die hydrophilen Gruppen HG können mit den nachstehend beschriebenen Liganden A und/oder vernetzenden funktionellen Gruppen B bzw. B' identisch sein. Die Zahl der hydrophilen Gruppen HG am Polymerisat P hängt vom Solvatationsvermögen und der sterischen Zugänglichkeit der Gruppen HG ab und kann vom Fachmann ebenfalls in an sich bekannter Weise eingestellt werden.

Als Polymerrückgrat der Polymerisate P können an sich beliebige Polymerisate eingesetzt werden, vorzugsweise solche mit mittleren Molekulargewichten Mw von 500 bis 50.000 Dalton, besonders bevorzugt mit Molekulargewichten Mw von 700 bis 20.000 Dalton. Als Polymerrückgrat werden bevorzugt Polyolefine oder Poly(meth)acrylate, Polyurethane, Polyalkylenimine, Polyvinylamine, Polyalkylenamine, Polyether, Polyester und Polyalkohole, welche insbesondere teilacetalisiert und/oder teilverestert sind, eingesetzt. Die Polymerisate P können linear, verzweigt und/oder dendritisch aufgebaut sein. Ganz besonders bevorzugte Polymerrückgrate sind Polyalkylenimine, Polyvinylamine, Polyalkohole sowie insbesondere Poly(meth)acrylate.

Die Polymerisate P sind vorzugsweise im sauren pH-Bereich hydrolysestabil, insbesondere bei pH-Werten < 5, besonders bevorzugt bei pH-Werten <3.

Als Liganden A sind alle Gruppen oder Verbindungen geeignet, welche mit den bei der Korrosion des Substrats freigesetzten Metallionen Chelate bilden können. In der Regel sind die Liganden A statistisch im Polymerisat P verteilt. Bevorzugt sind ein-und/oder mehrzähnige potentiell anionische Liganden. Besonders bevorzugte Liganden sind
- gegebenenfalls funktionalisierte Harnstoffe und/oder Thioharnstoffe, insbesondere Acylthioharnstoffe wie beispielsweise Benzoylthioharnstoff,
- gegebenenfalls funktionalisierte Amine und/oder Polyamine, wie insbesondere EDTA,
- gegebenenfalls funktionalisierte Amide, insbesondere Carbonsäureamide
- Imine und Imide, wie insbesondere iminfunktionalisierte Pyridine,
- Oxime, bevorzugt 1,2-Dioxime wie funktionalisiertes Diacetyldioxim,
- Organoschwefelverbindungen, wie insbesondere gegebenenfalls funktionalisierte Thiole wie Thioethanol, Thiocarbonsäuren, Thioaldehyde, Thioketone, Dithiocarbamate, Sulfonamide, Thioamide und besonders bevorzugt Sulfonate,
- Organophosphorverbindungen, wie insbesondere Phosphate, besonders bevorzugt Phosphorsäureester von (Meth)acrylaten, sowie Phosphonate, besonders bevorzugt Vinylphosphonsäure und hydroxy-, amino- und amidofunktionalisierte Phosphonate,
- gegebenenfalls funktionalisierte Organoborverbindungen, wie insbesondere Borsäureester,
- gegebenenfalls funktionalisierte Polyalkohole, wie insbesondere Kohlenhydrate und deren Derivate sowie Chitosane,
- gegebenenfalls funktionalisierte Säuren, wie insbesondere Di- und/oder oligofunktionelle Säuren, oder gegebenenfalls funktionalisierte (Poly)carbonsäuren, wie insbesondere Carbonsäuren, die ionisch und/oder koordinativ an Metallzentren gebunden werden können, bevorzugt (Poly)methacrylate mit Säuregruppen oder di- oder oligofunktionelle Säuren,
- gegebenenfalls funktionalisierte Carbene,
- Acetylacetonate,
- Gegebenenfalls funktionalisierte Heterocyclen, wie Chinoline, Pyridine, wie insbesondere iminfunktionalisierte Pyridine, Pyrimidine Pyrrole, Furane, Thiophene, Imidazole, Benzimidazole, bevorzugt Mercaptobenzimidazole, Benzthiazole, Oxazole, Thiazol, Pyrazole oder auch Indole,
- gegebenenfalls funktionalisierte Acetylene, sowie
- Phytinsäure und deren Derivate.

Als vernetzende funktionelle Gruppen B am Polymerisat P sind solche geeignet, die mit sich selbst und/oder mit komplementären funktionellen Gruppen B' kovalente Bindungen ausbilden können. In der Regel sind die vernetzenden funktionellen Gruppen B statistisch über das Polymerisat P verteilt. Bevorzugt werden die kovalenten Bindungen thermisch und/oder durch Einwirkung von Strahlung ausgebildet. Besonders bevorzugt werden die kovalenten Bindungen thermisch ausgebildet. Die vernetzenden funktionellen Gruppen B und B' bewirken die Ausbildung eines intermolekularen Netzwerks zwischen den Molekülen des Polymerisats P.
Unter Einwirkung von Strahlung vernetzende funktionelle Gruppen B bzw. B' weisen aktivierbare Bindungen auf, wie beispielsweise Kohlenstoff-Wasserstoff-, Kohlenstoff-Kohlenstoff-, Kohlenstoff-Sauerstoff-, Kohlenstoff-Stickstoff-, Kohlenstoff-Phosphor- oder Kohlenstoff-Silizium-Einfach- oder Doppelbindungen. Hierbei sind besonders Kohlenstoff-Kohlenstoff-Doppelbindungen vorteilhaft. Besonders gut geeignete Kohlenstoff-Kohlenstoff-Doppelbindungen als Gruppen B sind
- besonders bevorzugt (Meth)acrylatgruppen
- Ethylacrylatgruppen
- Vinylether- und Vinylestergruppen
- Crotonat- und Cinnamatgruppen
- Allylgruppen
- Dicyclopentadienylgruppen
- Norbornyl- und Isoprenylgruppen
- Isopropenyl- oder Butenylgruppen.

Thermisch vernetzende funktionelle Gruppen B können mit sich selbst oder vorzugsweise mit komplementären vernetzenden funktionellen Gruppen B' unter Einwirkung von thermischer Energie kovalente Bindungen ausbilden. Besonders gut geeignete thermisch vernetzende funktionelle Gruppen B und B' sind
- besonders bevorzugt Hydroxylgruppen
- Mercapto- und Aminogruppen,
- Aldehydgruppen,
- Azidgruppen,
- Säuregruppen, insbesondere Carbonsäuregruppen,
- Säureanhydridgruppen, insbesondere Carbonsäureanhydridgruppen,
- Säureestergruppen, insbesondere Carbonsäureestergruppen,
- Ethergruppen,
- besonders bevorzugt Carbamatgruppen,
- Harnstoffgruppen,
- Epoxidgruppen,
- besonders bevorzugt Isocyanatgruppen, welche ganz besonders bevorzugt mit Blockierungsmitteln umgesetzt sind, welche bei den Einbrenntemperaturen der erfindungsgemäßen Beschichtungsmitteln deblockieren und/oder ohne Deblockierung in das sich bildende Netzwerk eingebaut werden.

Besonders bevorzugte Kombinationen aus thermisch vernetzenden Gruppen B und komplementären Gruppen B' sind:
- Hydroxylgruppen mit lsocyanat- und/oder Carbamatgruppen,
- Aminogruppen mit lsocyanat- und/oder Carbamatgruppen,
- Carbonsäuregruppen mit Epoxidgruppen.

Besonders bevorzugte Polymerisate P enthalten Mischpolymerisate PM, herstellbar durch ein- oder mehrstufige, radikalische Copolymerisation im wässrigen Medium von
a) olefinisch ungesättigten Monomeren (a1) und (a2), wobei (a1) jeweils mindestens ein Monomer aus der Gruppe bestehend aus olefinisch ungesättigten Monomeren (a11) mit mindestens einer hydrophilen Gruppe HG, aus der Gruppe bestehend aus olefinisch ungesättigten Monomeren (a12) mit mindestens Ligandengruppe A und aus der Gruppe bestehend aus olefinisch ungesättigten Monomeren (a13) mit mindestens einer vernetzenden Gruppe B, umfasst
   und
b) mindestens einem von den olefinisch ungesättigten Monomeren (a1) und (a2) verschiedenen olefinisch ungesättigten Monomer der allgemeinen Formel I

   **R¹R²C=CR³R⁴** (I),

   worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen.

Geeignete hydrophile Monomere (a11) enthalten mindestens eine hydrophile Gruppe (HG), die, wie vorstehend beschrieben, bevorzugt aus der Gruppe, bestehend aus Sulfat-, Sulfonat-, Sulfonium-, Phosphat-, Phosphonat-, Phosphonium-, Ammonium-und/oder Carboxylatgruppen sowie Hydroxyl-, primäre, sekundäre und/oder tertiäre Amin-, Amidgruppen und/oder oligo- oder polyalkoxy-Substituenten, wie vorzugsweise ethoxylierte oder propoxylierte Substituenten, welche mit weiteren Gruppen verethert sein können, ausgewählt sind.
Beispiele gut geeigneter hydrophiler Monomere (a11) sind Acrylsäure, Methacrylsäure, Ethacrylsäure, Crotonsäure, Maleinsäure, Fumarsäure oder ltaconsäure und deren Salze, bevorzugt Acrylsäure und Methacrylsäure, olefinisch ungesättigte Sulfon-, Schwefel-, Phosphor- oder Phosphonsäuren, deren Salze und/oder deren Teilester. Weiterhin gut geeignet sind olefinisch unsgesättigte Sulfonium- und Phosphoniumverbindungen. Weiterhin gut geeignet sind Monomere (a11), die mindestens eine Hydroxylgruppe oder Hydroxymethylaminogruppe pro Molekül tragen und im wesentlichen säuregruppenfrei sind, wie insbsondere Hydroxyalkylester von alpha,beta-olefinisch ungesättigten Carbonsäuren, wie Hydroxyalkylester der Acrylsäure, Methacrylsäure und Ethacrylsäure, in denen die Hydroxyalkylgruppe bis zu 20 Kohlenstoffatome enthält, wie bevorzugt 2-Hydroxyethyl-, 2-Hydroxypropyl-, 3-Hydroxypropyl-, 3-Hydroxybutyl-, 4-Hydroxybutylacrylat, -methacrylat, Formaldehydaddukte von Aminoalkylestern von alpha,beta-olefinisch ungesättigten Carbonsäuren und von alpha,beta-ungesättigten Carbonsäureamiden, wie N-Methylol- und N,N-Dimethylol-aminoethylacrylat, - aminoethylmethacrylat, -acrylamid und -methacrylamid. Als Amingruppen-haltige Monomere (a11) sind geeignet: 2-Aminoethylacrylat und -methacrylat, N-Methyl- und N,N-Dimethyl-aminoethylacrylat, oder Allylamin. Als Amidgruppenhaltige Monomere (a11) werden bevorzugt Amide von alpha,beta-olefinisch ungesättigten Carbonsäuren, wie (Meth)Acrylsäureamid, bevorzugt N-Methyl - oder N,N-Dimethyl(meth)acrylsäureamid, eingesetzt. Als ethoxylierte oder propoxylierte Monomere (a11) werden bevorzugt Acryl- und/oder Methacrylsäureester von Polyethylenoxid- und/oder Polypropylenoxid-Einheiten eingesetzt, deren Kettenlänge vorzugsweise zwischen 2 und 20 Ethylenoxid- oder Propylenoxid-Bausteinen beträgt.

Bei der Auswahl der hydrophilen Monomere (a11) ist darauf zu achten, daß die Bildung unlöslicher Salze und Polyelektrolytkomplexe vermieden wird.

Beispiele gut geeigneter Monomere (a12) sind olefinisch ungesättigte Monomere, welche die vorstehend beschriebenen Liganden A als Substituenten aufweisen. Beispiele geeigneter Monomerer (a12) sind Ester und/oder die Amide der Acrylsäure, Methacrylsäure, Ethacrylsäure, Crotonsäure, Maleinsäure, Fumarsäure oder Itaconsäure, insbesondere der Acryl- und/oder der Methacrylsäure, welche die Liganden A in Ester- und/oder Amidrest aufweisen. Als Liganden A werden bevorzugt gegebenenfalls funktionalisierte Harnstoff und/oder Thioharnstoffsubtituenten, gegebenenfalls funktionalisierte Amin- und/oder Polyaminsubtiuenten, Imin- und Imidsubstituenten, wie insbesondere iminfunktionalisierte Pyridine, Oximsubstituenten, bevorzugt 1,2-Dioxime wie funktionalisiertes Diacetyldioxim, Organoschwefelsubstituenten, wie insbesondere ableitbar aus gegebenenfalls funktionalisierten Thiolen wie Thioethanol, Thiocarbonsäuren, Thioaldehyde, Thioketone, Dithiocarbamate, Sulfonamide, Thioamide und besonders bevorzugt Sulfonate, Organophosphorsubstituenten, wie insbesondere ableitbar aus Phosphaten, besonders bevorzugt Phosphorsäureestern von (Meth)acrylaten, sowie Phosphonaten, besonders bevorzugt Vinylphosphonsäuren und hydroxy-, amino- und amidofunktionalisierte Phosphonaten, gegebenenfalls funktionalisierte Organoborsubstituenten, wie insbesondere ableitbar von Borsäureestern, gegebenenfalls funktionalisierte Polyalkoholsubstituenten, wie insbesondere ableitbar aus Kohlenhydraten und deren Derivaten sowie Chitosanen, gegebenenfalls funktionalisierte Säuresubstituenten, wie insbesondere ableitbar aus di- und/oder oligofunktionellen Säuren, oder gegebenenfalls funktionalisierten (Poly)carbonsäuren, wie insbesondere Carbonsäuren, die ionisch und/oder koordinativ an Metallzentren gebunden werden können, bevorzugt (Poly)methacrylate mit Säuregruppen oder di- oder oligofunktionelle Säuren, Substutuenten mit gegebenenfalls funktionalisierten Carbene, Acetylacetonaten, gegebenenfalls funktionalisierte Acetylene, sowie Phytinsäuren und deren Derivate.

Beispiele gut geeigneter Monomerer (a13) sind olefinisch ungesättigte Monomere, welche die vorstehend beschriebenen Liganden B als Substituenten aufweisen. Beispiele geeigneter Monomerer (a13) sind Ester und/oder die Amide der Acrylsäure, Methacrylsäure, Ethacrylsäure, Crotonsäure, Maleinsäure, Fumarsäure oder Itaconsäure, insbesondere der Acryl- und/oder der Methacrylsäure, welche die vernetzenden Gruppen B in Ester- und/oder Amidrest aufweisen. Als vernetzende Gruppen B werden besonders bevorzugt Hydroxylgruppen, sowie beispielsweise Mercapto- und Aminogruppen, Aldehydgruppen, Azidgruppen, Säuregruppen, insbesondere Carbonsäuregruppen, Säureanhydridgruppen, insbesondere Carbonsäureanhydridgruppen, Säureestergruppen, insbesondere Carbonsäureestergruppen, Ethergruppen, besonders bevorzugt Carbamatgruppen, beispielsweise Harnstoffgruppen, Epoxidgruppen, sowie besonders bevorzugt Isocyanatgruppen, welche ganz besonders bevorzugt mit Blockierungsmitteln umgesetzt sind, welche bei den Einbrenntemperaturen der erfindungsgemäßen Beschichtungsmitteln deblockieren und/oder ohne Deblockierung in das sich bildende Netzwerk eingebaut werden.

Die Monomeren (a11) sind solchermaßen im Polymerisat PM angeordnet, dass sich der schon beschriebene Gradient der hydrophilen Gruppen HG entlang der Polymerhauptkette ergibt. Dies ergibt sich in der Regel durch die spezifischen Copolymerisationsparameter der unterschiedlichen Monomeren (a11), (a12), (a13), (a2) und (b) im wässrigen Reaktionsmedium. Die vorgenannten Monomeren (a12) und (a13) sind vorzugsweise statistisch entlang der Polymerhauptkette angeordnet. Aus den vorstehenden Aufführung der beispielhaft genannten Monomeren (a11), (a12) und (a13) geht hervor, dass die hydrophilen Gruppen HG, die Liganden A sowie die vernetzenden Gruppen B teilweise oder völlig identisch sein können. In diesem Fall weisen dann auch die Liganden A und die vernetzenden funktionellen Gruppen B in der Regel einen Gradienten entlang der Polymerhauptkette auf.

Beispiele bevorzugter olefinisch ungesättigter Comonomere (a2) sind
(1) im wesentlichen säuregruppenfreien Ester olefinisch ungesättigter Säuren, wie (Meth)Acrylsäure-, Crotonsäure-, Ethacrylsäure-, Vinylphosphonsäure- oder Vinylsulfonsäurealkyl- oder -cycloalkylester mit bis zu 20 Kohlenstoffatomen im Alkylrest, insbesondere Methyl-, Ethyl-, Propyl-, n-Butyl-, sec.-Butyl-, Hexyl-, Ethylhexyl-, Stearyl- und Lauryl-, Cyclohexyl(meth)acrylat sowie (Meth)acrylsäureester mit gemischten Alkylresten, wie beispielsweise C13-(Meth)acrylat (lineare Alkylreste mit im Mittel 13 C-Atomen);
(2) Vinylester von in alpha-Stellung verzweigten Monocarbonsäuren mit 5 bis 18 Kohlenstoffatomen im Molekül, wie die Vinylester der Versatic ®-Säure, die unter der Marke VeoVa ® vertrieben werden; sowie
(3) vinylaromatischen Kohlenwasserstoffe, wie Styrol, Vinyltoluol oder alpha-Alkylstyrole, insbesondere alpha-Methylstyrol;

Als Monomere (b) werden Verbindungen der allgemeinen Formel I verwendet. In der allgemeinen Formel I stehen die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl-Arylalkyl- oder Arylcycloalkylreste, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen. Beispiele geeigneter Reste R¹, R², R³ und R⁴ sind desweiteren beispielsweise in der DE-A-198 58 708 beschrieben.

Beispiele für erfindungsgemäß besonders bevorzugt verwendete Monomere (b) sind Diphenylethylen, Dinaphthalinethylen, cis- oder trans- Stilben, Vinyliden-bis(4-N,N-dimethylaminobenzol), Vinyliden-bis(4-aminobenzol) oder Vinyliden-bis(4-nitrobenzol).
Hinsichtlich der Reaktionsführung und der Eigenschaften der resultierenden Mischpolymerisate (PM) ist Diphenylethylen von ganz besonderem Vorteil und wird deshalb erfindungsgemäß ganz besonders bevorzugt verwendet.

Bei der Herstellung der Mischpolymerisate PM wird vorzugsweise die Mischung aller Monomere gleichzeitig in die Wasserphase eindosiert, wobei der Gradient an hydrophilen Gruppen entlang der Polymerkette durch die Ausbildung von Oligo- oder Polymeren mit anfangs hoher Konzentration an hydrophilen Gruppen entlang der Polymerkette ein stellt und wobei im Laufe des weiteren Kettenwachstums die Zahl der hydrophilen Gruppen entlang der Polymerkette abnimmt. Das Konzentrationsgefälle der hydrophilen Gruppen entlang der Polymerkette kann auch über einen Zulauf von zeitlich und/oder räumlich unterschiedlichen Zusammensetzungen des Monomerengemischs aus (a11), (a12), (a13), (a2) und (b) in an sich bekannter Weise realisiert werden. Bezüglich der Herstellung der Mischpolymerisate PM sei weiterhin auf die Lehren der DE-A-198 58 708, der DE-A-102 06 983 und der DE-A-102 56 226 verwiesen.

Als Vernetzer V mit thermisch und/oder durch Einwirkung von Strahlung vernetzenden Gruppen B und/oder B' sind prinzipiell alle dem Fachmann bekannten Vernetzer geeignet. Bevorzugt sind niedermolekulare oder oligomere Vernetzer V mit einem Molekulargewicht von < 20.000 Dalton, besonders bevorzugt < 10.000 Dalton. Das die vernetzenden Gruppen B und/oder B' tragende Rückgrat der Vernetzer V kann linear, verzweigt und/oder hyperverzweigt aufgebaut sein. Bevorzugt sind verzweigte und/oder hyperverzweigte Strukturen, insbesondere solche, wie sie beispielsweise in WO-A-01/46296 beschrieben sind.
Die Vernetzer V sind vorzugsweise im sauren pH-Bereich hydrolysestabil, insbesondere bei pH-Werten < 5, besonders bevorzugt bei pH-Werten < 3.
Besonders bevorzugte Vernetzer V tragen die vorstehend beschriebenen vernetzenden Gruppen B und/oder B', welche mit den vernetzenden Gruppen des Polymerisats P unter der Ausbildung kovalenter Bindungen reagieren. Ganz besonders bevorzugt sind Vernetzer V mit thermisch und gegebenenfalls zusätzlich durch Einwirkung von Strahlung vernetzenden Gruppen B und/oder B'.
In einer weiteren besonders bevorzugten Ausführungsform der Erfindung tragen die Vernetzer V zusätzlich zu den vernetzenden Gruppen B und/oder B' Liganden A', die identisch mit und/oder unterschiedlich von den Liganden A des Polymerisats P sein können.

Besonders gut geeignete vernetzende funktionelle Gruppen B und B' für die Vernetzer V sind:
- insbesondere Hydroxylgruppen,
- insbesondere Aldehydgruppen,
- Azidgruppen,
- Säureanhydridgruppen, insbesondere Carbonsäureanhydridgruppen,
- Carbamatgruppen,
- Harnstoffgruppen,
- insbesondere Isocyanatgruppen, welche ganz besonders bevorzugt mit Blockierungsmitteln umgesetzt sind, welche bei den Einbrenntemperaturen der erfindungsgemäßen Beschichtungsmitteln deblockieren und/oder ohne Deblockierung in das sich bildende Netzwerk eingebaut werden,
- (Meth)acrylatgruppen,
- Vinylgruppen
oder Kombinationen hiervon.

Ganz besonders bevorzugt als Vernetzer V sind verzweigte und/oder hyperverzweigte Polyisocyanate, die zumindest teilweise blockiert sind und die zusätzlich Liganden A tragen.
In einer weiteren Ausführungsform der Erfindung tragen die Vernetzer V Gruppen B und/oder B', welche in der Lage sind, mit den Liganden L des Polymerisats P kovalente Bindungen auszubilden.

Als kontinuierliche Phase wird für das erfindungsgemäße Beschichtungsmittel Wasser verwendet, bevorzugt entionisiertes und/oder destilliertes Wasser. Weiterhin können in der kontinuierlichen Phase weitgehend wassermischbare Lösemittel in Anteilen von bis zu 30 Gew.-%, bevorzugt bis zu 25 Gew.-%, bezogen auf die kontinuierliche Phase, enthalten sein. Bevorzugte wassermischbare Lösemittel sind Ethanol, Propanol, Methylethylketon, N-Ethylpyrrolidon.
Insbesondere bei der Verwendung der erfindungsgemäßen Beschichtungsmittel bei der Reparatur von Lackschäden an schon lackierten Substraten werden die wassermischbaren Lösemittel in Anteilen von 1 bis 30 Gew.-%, bezogen auf die kontinuierliche Phase, bevorzugt in Anteilen von 2 bis 25 Gew.-% eingesetzt.

Als weitere bevorzugte Komponente wird mindestens eine zur Oxidation befähigte Säure solchermaßen eingesetzt, daß der pH-Wert des erfindungsgemäßen Beschichtungsmittels vorzugsweise zwischen 1 und 5, bevorzugt zwischen 2 und 4 liegt. Besonders bevorzugte Säuren sind ausgewählt aus der Gruppe der oxidierenden Mineralsäuren, wie insbesondere Salpetersäure, salpetrige Säure, Schwefelsäure und/oder schweflige Säure. Zur Einstellung des pH-Werts kann, sofern nötig, ein Puffermedium eingesetzt werden, wie beispielsweise Salze starker Basen und schwacher Säuren, wie insbesondere Ammoniumacetat.
In einer besonders bevorzugten Ausführungsform der Erfindung enthält das erfindungsgemäße Beschichtungsmittel zusätzlich ein Salz, welches als kationischen Bestandteil Lanthanidmetallkationen und/oder d-Metallkationen aufweist.
Bevorzugte Lantanidmetallkationen sind Lanthan-, Cer-, Praseodym-, Neodym-, Promethium-, Samarium-, Europium- und/oder Dysprosiumkationen. Ganz besonders bevorzugt sind Lanthan-, Cer- und Praseodymkationen. Die Lanthanidmetallkationen können in ein-, zwei- und/oder dreiwertiger Oxidationsstufe vorliegen, wobei die dreiwertige Oxidationstufe bevorzugt ist.
Bevorzugte d-Metallkationen sind Titan-, Vanadium-, Mangan-, Yttrium-, Zirkon-, Niob-, Molybdän-, Wolfram-, Kobalt-, Ruthenium-, Rhodium-, Palladium-, Osmium-und/oder Iridiumkationen. Als d-Elementkation ausgenommen ist das Chromkation in allen Oxidationsstufen. Ganz besonders bevorzugt sind Vanadium-, Mangan-, Wolfram-, Molybdän- und/oder Yttriumkationen. Die d-Elementkationen können in ein- bis sechswertiger Oxidationsstufe vorliegen, wobei eine drei- bis sechswertige Oxidationsstufe bevorzugt ist.

### Das Verfahren zur Applikation des erfindungsgemäßen Beschichtungsmittels

Vor der Applikation des erfindungsgemäßen Beschichtungsmittels wird das Substrat in einer bevorzugten Ausführungsform der Erfindung gereinigt, insbesondere von öligen und fettigen Rückständen, wobei bevorzugt Detergenzien und/oder alkalische Reinigungsmittel zur Anwendung kommen. In einer weiteren bevorzugten Ausführung der Erfindung wird nach der Reinigung mit Detergenzien und/oder alkalischen Reinigungsmitteln vor der Applikation des erfindungsgemäßen Beschichtungsmittels nochmals mit Wasser nachgespült. Zur Entfernung von Ablagerungen und/oder chemisch modifizierter, insbesondere oxidierter, Schichten an der Oberfläche des Substrats wird in einer weiteren bevorzugten Ausführungsform der Erfindung vor dem Nachspülschritt noch eine mechanische Reinigung der Oberfläche, beispielsweise mit Schleifmedien, und/oder eine chemische Entfernung der Oberflächenschichten, beispielsweise mit deoxidierenden Reinigungsmitteln, erfolgen.

Das solchermaßen vorbehandelte Substrat wird mit dem erfindungsgemäßen Beschichtungsmittel in Kontakt gebracht. Dies erfolgt vorzugsweise durch Eintauchen in ein Bad oder Durchziehen des Substrats durch ein Bad, enthaltend das erfindungsgemäße Beschichtungsmittel. Die Verweilzeiten des Substrats im erfindungsgemäßen Beschichtungsmittel betragen vorzugsweise 1 Sekunde bis 15 Minuten, bevorzugt 10 Sekunden bis 10 Minuten und besonders bevorzugt 30 Sekunden bis 8 Minuten. Die Temperatur des Bads enthaltend das erfindungsgemäße Beschichtungsmittel liegt vorzugsweise zwischen 20 und 90 °C, bevorzugt zwischen 25 und 80 °C, besonders bevorzugt zwischen 30 und 70 °C.

Die Dicke der mit dem erfindungsgemäßen Beschichtungsmittel erzeugten Schicht beträgt vor dem Trocknungsschritt vorzugsweise zwischen 5 und 900 nm, besonders bevorzugt zwischen 10 und 800 nm, was bezogen auf den Korrosionsschutzeffekt eine signifikante Einsparung an eingesetztem Material ermöglicht.

Nach der Behandlung des Substrats mit dem erfindungsgemäßen Beschichtungsmittel wird vorzugsweise eine Trocknung des Verbunds aus Substrat und Beschichtungsmittel bei Temperaturen zwischen ca. 30 und 200 °C, insbesondere zwischen 100 und 180 °C durchgeführt, wobei die Trocknungsapparatur für die vorteilhafte Wirkung des erfindungsgemäßen Beschichtungsmittels als weitgehend unkritisch angesehen werden kann. Sind die vernetzenden Gruppen B und/oder B' zumindest teilweise strahlenhärtend, wird, gegebenenfalls zusätzlich zur thermischen Behandlung, eine Bestrahlung der Schicht aus dem erfindungsgemäßen Beschichtungsmittel, vorzugsweise in dem Fachmann bekannter Weise mit aktinischer Strahlung und/oder mit Elektronenstrahlung, durchgeführt.

Das erfindungsgemäße Beschichtungsmittel kann überraschenderweise auf einem großen Spektrum von Substraten zur Anwendung kommen und ist weitgehend vom Redoxpotential des Substrats unabhängig.
Bevorzugte Substratmaterialien sind Zink, Eisen, Magnesium und Aluminium, sowie deren Legierungen, wobei die vorgenannten Metalle bevorzugt zu mindestens 20 Gew.-% in den Legierungen vorhanden sind. Vorzugsweise sind die Substrate als Bleche ausgeformt, wie sie beispielsweise in der Automobilindustrie, der Bauindustrie sowie der Maschinenbauindustrie zum Einsatz kommen. Die mit dem erfindungsgemäßen Beschichtungsmittel beschichteten Bleche kommen insbesondere bei Formblechen sowie bei der Bandbeschichtung (Coil-Coating) von Blechen zum Einsatz.
In einer weiteren Ausführungsform der Erfindung werden die erfindungsgemäßen Beschichtungsmittel zur Versiegelung von Schnittkanten der oben beschriebenen Bleche eingesetzt, insbesondere zur Versiegelung der Schnittkanten von schon beschichteten Blechen.

In einer weiteren Ausführungsform der Erfindung werden die zuvor beschriebenen Substrate vor der Abscheidung des erfindungsgemäßen Beschichtungsmittels mit einem weiteren ebenfalls stromlos abscheidbaren Korrosionsschutzmittel beschichtet. Bevorzugt werden Korrosionsschutzmittel mit anorganischen Bestandteilen, die sowohl eine gute Haftung zu der Schicht aus dem erfindungsgemäßen Beschichtungsmittel als auch zum unbeschichteten Substrat aufweisen. Solche anorganischen Korrosionsschutzmittel sind beispielsweise in EP-A-1 217 094, EP-A-0 534 120, US-A-5,221,371 und WO-A-01/86016 beschrieben.

In einer besonders bevorzugten Ausführungsform der Erfindung wird vor dem Auftrag des erfindungsgemäßen Beschichtungsmittels in einem separaten Schritt ein wäßriges Korrosionsschutzmittel K mit einem pH-Wert zwischen 1 und 5 aufgetragen, welches mindestens eine Verbindung AA mit einem Lanthanid-Metall als Kation und/oder einem d-Element-Metall mit Ausnahme von Chrom als Kation und/oder einem d-Element-Metallat mit Ausnahme von chromhaltigen Metallaten als Anion sowie BB mindestens zur Oxidation befähigten Säure mit Ausnahme von phosphorhaltigen und/oder chromhaltigen Säuren enthält.

Das die Komponente AA bildende Salz weist als kationischen Bestandteil Lanthanidmetallkationen und/oder d-Metallkationen auf.
Bevorzugte Lantanidmetallkationen sind Lanthan-, Cer-, Praseodym-, Neodym-, Promethium-, Samarium-, Europium- und/oder Dysprosiumkationen. Ganz besonders bevorzugt sind Lanthan-, Cer- und Praseodymkationen. Die Lanthanidmetallkationen können in ein-, zwei- und/oder dreiwertiger Oxidationsstufe vorliegen, wobei die dreiwertige Oxidationstufe bevorzugt ist.
Bevorzugte d-Metallkationen sind Titan-, Vanadium-, Mangan-,Yttrium-, Zirkon-, Niob-, Molybdän-, Wolfram-, Kobalt-, Ruthenium-, Rhodium-, Palladium-, Osmium-und/oder Iridiumkationen. Als d-Elementkation ausgenommen ist das Chromkation in allen Oxidationsstufen. Ganz besonders bevorzugt sind Vanadium-, Mangan-, Wolfram-, Molybdän- und/oder Yttriumkationen. Die d-Elementkationen können in ein- bis sechswertiger Oxidationsstufe vorliegen, wobei eine drei- bis sechswertige Oxidationsstufe bevorzugt ist.
Die Salze der vorgenannten Kationen der Komponente AA sind vorzugsweise in Wasser sehr gut löslich. Besonders bevorzugt sind Salze [Kation]n[Anion]m (mit n,m >= 1) mit einem Löslichkeitsprodukt LP = [Kation]ⁿ *[Anion]^{m} > 10⁻⁸ * mol^{(n+m)}/l^{(n+m)}, ganz besonders bevorzugt Salze mit einem Löslichkeitsprodukt LP > 10⁻⁶ * mol^{(n+m)}/l^{(n+m)}. In einer ganz besonders bevorzugten Ausführungsform der Erfindung beträgt die Konzentration des oder der Salze (A) im Korrosionsschutzmittel 10⁻¹ bis 10⁻⁴ mol/l, insbesondere 5*10⁻¹ bis 10⁻³ mol/l.
Die mit den d-Elementkationen die Salze AA bildenden Anionen werden bevorzugt solchermaßen ausgewählt, daß die vorgenannten Bedingungen für das Löslichkeitsprodukt LP gegeben sind. Bevorzugt werden Anionen oxidierender Säuren der Elemente der VI., VII. und VIII. Nebengruppe des Periodensystems der Elemente sowie Anionen oxidierender Säuren der Elemente der V. und VI. Hauptgruppe des Periodensystems der Elemente mit Ausnahme von Anionen oxidierender Säure von Phosphor und Chrom eingesetzt, wie insbesondere Nitrate, Nitrite, Sulfite und/oder Sulfate. Weiterhin bevorzugt als Anionen sind Halogenide, wie insbesondere Chloride und Bromide.

In einer weiteren bevorzugten Ausführungsform der Erfindung können die d-Elementkationen auch als Komplexe mit ein- und/oder mehrzähnigen potentiell anionischen Liganden vorliegen. Bevorzugte Liganden sind gegebenenfalls funktionalisierte Terpyridine, gegebenenfalls funktionalisierte Harnstoffe und/oder Thioharnstoffe, gegebenenfalls funktionalisierte Amine und/oder Polyamine, wie insbesondere EDTA, Imine, wie insbesondere iminfunktionalisierte Pyridine, Organoschwefelverbindungen, wie insbesondere gegebenenfalls funktionalisierte Thiole, Thiocarbonsäuren, Thioaldehyde, Thioketone, Dithiocarbamate, Sulfonamide, Thioamide und besonders bevorzugt Sulfonate, gegebenenfalls funktionalisierte Organoborverbindungen, wie insbesondere Borsäureester, gegebenenfalls funktionalisierte Polyalkohole, wie insbesondere Kohlenhydrate und deren Derivate sowie Chitosane, gegebenenfalls funktionalisierte Säuren, wie insbesondere Di-und/oder oligofunktionelle Säuren, gegebenenfalls funktionalisierte Carbene, Acetylacetonate, gegebenenfalls funktionalisierte Acetylene, gegebenenfalls funktionalisierte Heterocyclen, wie Chinoline, Pyridine, wie insbesondere iminfunktionalisierte Pyridine, Pyrimidine Pyrrole, Furane, Thiophene, Imidazole, Benzimidazole, bevorzugt Mercaptobenzimidazole, Benzthiazole, Oxazole, Thiazol, Pyrazole oder auch Indole, gegebenenfalls funktionalisierte Carbonsäuren, wie insbesondere Carbonsäuren, die ionisch und/oder koodinativ an Metallzentren gebunden werden können, sowie Phytinsäure und deren Derivate. Ganz besonders bevorzugt sind als Liganden Phytinsäure, deren Derivate und Sulfonate, die gegebenenfalls funktionalisiert sind.

In einer weiteren Ausführungsform der Erfindung enthalten die Salze AA d-Element-Metallate als Anionen, die gemeinsam mit den d-Element-Kationen oder auch für sich allein das Salz AA bilden können. Bevorzugte d-Elemente für die Metallate sind Vanadium, Mangan, Zirkon, Niob, Molybdän und/oder Wolfram. Ganz besonders bevorzugt sind Vanadium, Mangan, Wolfram und/oder Molybdän. Als d-Element-Metallat ausgenommen sind Chromate in allen Oxidationsstufen. Besonders bevorzugte d-Element-Metallate sind Oxoanionen, wie insbesondere Wolframate, Permanganate, Vanadate und/oder Molybdate.
Bilden die d-Element-Metallate für sich allein, das heißt ohne Lanthanidmetallkationen und/oder d-Metallkationen das Salz AA, so gilt für das bevorzugte Löslichkeitsprodukte LP solcher Salze das Vorgesagte. Bevorzugte Kationen solcher Salze sind gegebenenfalls mit organischen Resten substituierte Ammoniumionen, Phosphoniumionen und/oder Sulfoniumionen, Alkalimetallkationen, wie insbesondere Lithium, Natrium und/oder Kalium, Erdalkalimetallkationen, wie insbesondere Magnesium und/oder Kalzium. Besonders bevorzugt sind die gegebenenfalls mit organischen Resten substituierten Ammoniumionen und die Alkalimetallkationen, die ein besonders hohes Löslichkeitsprodukt LP des Salzes AA gewährleisten.

Als Komponente BB des Korrosionsschutzmittels K wird mindestens eine zur Oxidation befähigte Säure solchermaßen eingesetzt, daß der pH-Wert des Korrosionsschutzmittel zwischen 1 und 5, bevorzugt zwischen 2 und 4 liegt. Bevorzugte Säuren BB sind ausgewählt aus der Gruppe der oxidierenden Mineralsäuren, wie insbesondere Salpetersäure, salpetrige Säure, Schwefelsäure und/oder schweflige Säure.
Zur Einstellung des pH-Wert kann, sofern nötig, ein Puffermedium eingesetzt werden, wie beispielsweise Salze starker Basen und schwacher Säuren, wie insbesondere Ammoniumacetat.

Als kontinuierliche Phase wird für das erfindungsgemäße Beschichtungsmittel Wasser verwendet, bevorzugt entionisiertes und/oder destilliertes Wasser.

Vor der Applikation des Korrosionschutzmittels K wird das Substrat in einer bevorzugten Ausführungsform der Erfindung gereinigt, insbesondere von öligen und fettigen Rückständen, wobei bevorzugt Detergenzien und/oder alkalische Reinigungsmittel zur Anwendung kommen. In einer weiteren bevorzugten Ausführung der Erfindung wird nach der Reinigung mit Detergenzien und/oder alkalischen Reinigungsmitteln vor der Applikation des Korrosionschutzmittels K nochmals mit Wasser nachgespült. Zur Entfernung von Ablagerungen und/oder chemisch modifizierter, insbesondere oxidierter, Schichten an der Oberfläche des Substrats wird in einer weiteren bevorzugten Ausführungsform der Erfindung vor dem Nachspülschritt noch eine mechanische Reinigung der Oberfläche, beispielsweise mit Schleifmedien, und/oder eine chemische Entfernung der Oberflächenschichten, beispielsweise mit deoxidierenden Reinigungsmitteln, erfolgen.

Das solchermaßen vorbehandelte Substrat wird mit dem Korrosionschutzmittel K in Kontakt gebracht. Dies erfolgt vorzugsweise durch Eintauchen oder Durchziehen des Substrats in beziehungsweise durch ein Bad, enthaltend das Korrosionschutzmittel K. Die Verweilzeiten des Substrats im Korrosionschutzmittel K betragen vorzugsweise 1 Sekunde bis 10 Minuten, bevorzugt 10 Sekunden bis 8 Minuten und besonders bevorzugt 30 Sekunden bis 6 Minuten. Die Temperatur des Bads enthaltend das Korrosionschutzmittel K liegt vorzugsweise zwischen 25 und 90 °C, bevorzugt zwischen 30 und 80 °C, besonders bevorzugt zwischen 35 und 70 °C.

Nach der Behandlung des Substrats mit dem erfindungsgemäßen Korrosionsschutzmittel wird vorzugsweise eine Trocknung des Verbunds aus Substrat und Korrosionsschutzmittel durch Trockenblasen oder durch Trocknung bei Temperaturen zwischen ca. 30 und 200 °C durchgeführt, wobei die Trocknungstemperatur sowie die Trocknungsart bzw. -apparatur für die vorteilhafte Wirkung des Korrosionschutzmittels K als weitgehend unkritisch angesehen werden kann.

Im zweiten Schritt des bevorzugten Verfahrens werden die mit dem Korrosionschutzmittels K beschichteten Substrate mit dem erfindungsgemäßen Beschichtungsmittel beschichtet. Dies erfolgt vorzugsweise durch Eintauchen oder Durchziehen des beschichteten Substrats in beziehungsweise durch ein Bad, enthaltend das erfindungsgemäße Beschichtungsmittel. Die Verweilzeiten des Substrats im erfindungsgemäßen Beschichtungsmittel betragen vorzugsweise 1 Sekunde bis 15 Minuten, bevorzugt 10 Sekunden bis 10 Minuten und besonders bevorzugt 30 Sekunden bis 8 Minuten. Die Temperatur des Bads enthaltend das erfindungsgemäße Beschichtungsmittel liegt vorzugsweise zwischen 20 und 90 °C, bevorzugt zwischen 25 und 80 °C, besonders bevorzugt zwischen 30 und 70 °C.

Die Dicke der mit dem erfindungsgemäßen Beschichtungsmittel erzeugten Schicht beträgt vor dem Trocknungsschritt vorzugsweise zwischen 5 und 900 nm, besonders bevorzugt zwischen 10 und 800 nm, was bezogen auf den Korrosionsschutzeffekt eine signifikante Einsparung an eingesetztem Material ermöglicht.

Nach der Behandlung des Substrats mit dem erfindungsgemäßen Beschichtungsmittel wird vorzugsweise eine Trocknung des Verbunds aus Substrat und den Schichten aus den Korrosionsschutzmittel K sowie dem erfindungsgemäßen Beschichtungsmittel bei Temperaturen zwischen ca. 30 und 200 °C, insbesondere zwischen 100 und 180 °C durchgeführt, wobei die Trocknungsapparatur für die vorteilhafte Wirkung des erfindungsgemäßen Beschichtungsmittel als weitgehend unkritisch angesehen werden kann. Sind die vernetzenden Gruppen B und/oder B' zumindest teilweise strahlenhärtend, wird, gegebenenfalls zusätzlich zur thermischen Behandlung, eine Bestrahlung der Schicht aus dem erfindungsgemäßen Beschichtungsmittel, vorzugsweise in dem Fachmann bekannter Weise mit aktinischer Strahlung und/oder mit Elektronenstrahlung, durchgeführt.

Die im folgenden angeführten Beispiele sollen die Erfindung weiter veranschaulichen.

### Beispiele

### Beispiel 1: Herstellung des ersten Beckens mit dem Korrosionsschutzmittel K

In einem Liter Wasser werden 1,77g (0,01 mol) Ammoniummolybdat-Tetrahydrat gelöst. Die Lösung wird mittels Salpetersäure auf einen pH = 2,5 eingestellt. Gegebenfalls wird zur Einstellung des vorgenannten pH-Werts mit wäßrigen Ammoniak-Lösung gegengepuffert.

### Beispiel 2a: Synthese der Polymerkomponente PM für das erfindungsgemäße Beschichtungsmittel

In einem 4-kg - Stahlreaktor werden 1016,9g VE-Wasser vorgelegt und auf 90°C aufgeheizt. Anschließend werden bei einer konstanten Temperatur von 90°C drei separate Zuläufe parallel und gleichmäßig zudosiert. Zulauf 1 besteht aus 90,0g Dimethylaminopropylmethacrylamid, 240,0g Methylmethacrylat , 120,0g Hydroxyethylmethacrylat, 120,0g Methacrylester 13 (Methacrylsäurester, mittlere Zahl der C-Atome des linearen, gesättigten Alkohols ist 13 ; CAS Nr. 90 551-76-1 ; Lieferant: Degussa, Röhm GmbH, Darmstadt) und 30,0g Diphenylethylen. Als Zulauf 2 werden 165,7g einer Lösung, die aus 61,0 einer 85%-igen Phosphorsäure und 104,7g VE-Wasser besteht, zugegeben. Zulauf 3 besteht aus einer Lösung von 45,0g Ammonoiumperoxidisulfat in 105,0g VE-Wasser. Die Zuläufe 1 und 2 werden innerhalb von 4 Stunden zudosiert, Zulauf 3 wird innerhalb von 4,5 Stunden zudosiert. Nach Beenden der Zugabe schließt sich eine 2-stündige Nachpolymerisationsphase bei 90°C an. Die erhaltene Dispersion weist einen Festkörpergehalt von 37 Gew.-% auf.

### Beispiel 2b: Synthese der Vernetzers V für das erfindungsgemäße Beschichtungsmittel

Es werden 3,1g (0,008 mol) Cer(III)chlorid Heptahydrat in 50 ml Wasser vorgelegt. Es wird eine Lösung aus 4,1g(0,025 mol) 4-Hydroxyzimtsäure und 1g (0,025 mol) Natronlauge in 50 ml Wasser hergestellt und mit Salzsäure auf pH=7,9 gebracht. Diese Lösung wird langsam zur Cer-Lösung gegeben, so daß der pH-Wert der Cer-Lösung nicht über 6 steigt. Der Niederschlag wird mit Ethanol und Wasser gewaschen.
1,7 g (0,003 mol) dieses Cer-Komplexes wird zusammen mit 9,1g (2,5% NCO-Gehalt) eines verzweigten und zu 75% mit Dimethylpyrazol blockierten Polyisocyanats (Bayhydur VP LS 2319 der Fa.Bayer AG) in 80,1g Ethylacetat und 0,7 g einer OH-funktionellen Dipropylentriamins (Jeffcat-ZR 50 der Fa. Huntsmann) für fünf Stunden bei 40°C zur Reaktion gebracht. Das Produkt wird ohne weitere Reinigung eingesetzt.

### Beispiel 2: Herstellung des zweiten Beckens mit dem erfindungsgemäßen Beschichtungsmittel

In einem Liter Wasser werden 3g der Polymerkomponente P gemäß Beispiel 2a und 2g des Vernetzers V gemäß Beispiel 2b gelöst. Die Lösung wird mittels Salpetersäure auf einen pH = 2,5 eingestellt. Gegebenfalls wird zur Einstellung des vorgenannten pH-Werts mit wäßrigen Ammoniak-Lösung gegengepuffert.

### Beispiel 3: Beschichtung des Substrats mit dem Korrosionsschutzmittel K und dem erfindungsgemäßen Beschichtungsmittel

Das Substrat (Blech aus verzinktem Stahl) wird 5 Minuten bei 55°C in einer Reinigungslösung (Ridoline C72 der Fa. Henkel) gereinigt und danach mit destilliertem Wasser abgespült.
Anschließend wird das mit destilliertem Wasser abgespülte Blech sofort bei 45°C für 4 Minuten in das erste Becken des Korrosionsschutzmittels K gemäß Beispiel 1 eingetaucht. Danach wird das beschichtete Blech mit destilliertem Wasser abgespült und mit Stickstoff trockengeblasen.
Direkt anschließend werden die Bleche für 5 Minuten bei 35°C in das zweite Becken des erfindungsgemäßen Korrosionsschutzsmittels gemäß Beispiel 2 eingetaucht. Es bildet sich eine nicht sichtbare bis opalezierende Schicht im λ/4-Bereich des sichtbaren Lichts aus. Danach wird das beschichtete Blech mit destilliertem Wasser abgespült und mit Stickstoff trockengeblasen. Das Blech wird danach für 30 Minuten bei 150°C getrocknet.
Das solchermaßen beschichtete Blech und die nachgenannten Referenzproben werden mit einer Blechschere geschnitten, um auf allen Blechen freie Kanten zu erhalten.
Als Referenz für das erfindungsgemäße wird Gardobond 958 54 (Fa.Chemetall GmbH: verzinktes Stahlblech mit Phosphatierung und Nachspülung mit Zirkoniumhexafluorid-Lösung) verwendet.

### Beispiel 4: Schnellkorrosionstest mit 3%-iger wäßriger Natriumchloridlösung an den gemäß Beispiel 3 beschichteten Substraten

Es wird eine Lösung von 3% Natriumchlorid in vollentsalztem Wasser eingesetzt. Als Substrate können hier Stahl, verzinkter Stahl oder Zinklegierungen genutzt werden. Für Aluminium und seine Legierungen wird die Natriumchlorid-Lösung zusätzlich mit Essigsäure auf einen pH = 3 eingestellt. Die Proben (3*3 cm) werden in 170 ml dieser Lösung eingetaucht und werden in einem Exsikkator bei nahezu 100% Feuchte gelagert. Die feuchte Atmosphäre wird durch fettfreie Preßluft erzeugt, die durch zwei Waschflaschen mit vollentsalztem Wasser geleitet wird und anschließend durch den Exsikkator strömt. Durch diesen Aufbau wird eine konstante Luftfeuchte sowie ein konstanter Kohlendioxidgehalt gewährleistet, wobei die Temperatur auf 25°C gehalten wird. Die Proben werden vor dem Eintauchen auf einer Analysenwaage gewogen. Nicht behandelte Referenzbleche (Stahl, verzinkter Stahl) werden für 5 Minuten in Ethanol im Ultraschallbad gereinigt. Nach 24 Stunden Lagerung werden die Bleche aus der Lösung entnommen und mit einer Einwegpipette über dem Becherglas mit der belasteten 3%igen Natriumchlorid-Lösung abgespült (ca. 10ml Natriumchlorid-Lösung je Probenseite). Das Blech wird anschließend mit Stickstoff trocken geblasen und für 15 Minuten bei 50°C getrocknet und gewogen. Das Blech wird anschließend erneut in eine frische Natriumchlorid-Lösung gleicher Konzentration gehangen. Die gebrauchte Natriumchlorid-Lösung wird mit 1 ml einer 32%igen Salzsäure versetzt, um eventuell vorhandene Niederschläge zu lösen. Die erhaltene klare Lösung wird mittels ICP-OES (Inductively coupled Plasma - Optical Emission Spectrometry) auf den Gehalt an Substratmetall (Zn, Fe, AI, Mg) vermessen.
Die oben beschriebene Prozedur wird nach 24h, 72h, 96h und 168h wiederholt. Die Messung wird durch eine Doppelbestimmung verifiziert.

### Auswertung des Korrosionstests:

### a) ICP-OES Daten der Immersionslösung

Die ICP-OES Daten werden auf die Fläche der Proben normiert. Diese Daten ergeben einen linearen Verlauf. Aufgrund der Linearität der Korrosionskinetik, können die unterschiedlichen Beschichtungen durch die Steigungen des Graphen verglichen werden. Die ICP-OES Daten geben die Auflösung des Substrates pro Fläche und Zeit wieder und sind somit ein direktes Maß für die Korrosionsrate die bei einer jeweiligen Beschichtung möglich ist.

### b) Wägung der Proben

Die Wägungen geben darüber hinaus noch Informationen über die Möglichkeiten in wieweit die Beschichtung eine Passivierung der Oberfläche möglich macht oder nicht. Hierzu wird der Gewichtsverlust in Molaritäten umgerechnet und auf die Fläche der Proben normiert. Zum Vergleich der Korrosionskinetiken dient das jeweilige Substrat, welches lediglich alkalisch gereinigt wurde. Dargestellt werden dann die Steigungen aus den ICP-OES-Daten im Vergleich zur Null-Referenz (reines Substrat) und anderen Referenzen.

**Tabelle 1: Ergebnisse des Korrosionstests**

| Substrat | ICP-OES-Daten (10⁻⁴ *mol/l *h*cm²) |
|---|---|
| Verzinktes Stahlblech (unbeschichtet) | 8,14 |
| Verzinktes Stahlblech beschichtet gemäß Beispiel 3 | 5,17 |
| Gardobond 958 54 (Referenz) | 6,17 |

Die Ergebnisse der Korrosionstests zeigen deutlich die Überlegenheit des erfindungsgemäßen Beschichtungsmittels gegenüber einem herkömmlichen Korrosionsschutz (Referenz).

## Patentansprüche

1. wässriges Beschichtungsmittel für metallische Substrate enthaltend ein wasserdispergierbares und/oder wasserlösliches Polymerisat P mit einem Gradienten in der Konzentration von kovalent gebundenen hydrophilen Gruppen entlang der Polymerhauptkette, wobei das Polymerisat P kovalent gebundenene Liganden A aufweist, welche mit den bei der Korrosion des Substrats freigesetzten Metallionen und/oder der Substratoberfläche Chelate bilden, sowie vernetzende funktionelle Gruppen B aufweist, die mit sich selbst, mit weiteren komplementären funktionellen Gruppen B' des Polymerisats P und/oder mit weiteren funktionellen Gruppen B und/oder B' an Vernetzern V kovalente Bindungen ausbilden können.

2. Wässriges Beschichtungsmittel gemäß Anspruch 1, **dadurch gekennzeichnet, dass** das Polymerisat P mindestens ein Polymerisat enthält, welches durch radikalische Polymerisation von olefinisch ungesättigten Monomeren hergestellt wird.

3. Wässriges Beschichtungsmittel gemäß den Ansprüchen 1 oder 2, **dadurch gekennzeichnet dass** das Polymerisat P mindestens ein Mischpolymerisat PM enthält, erhältlich durch die radikalische Polymerisation von
a) olefinisch ungesättigten Monomeren (a1) und (a2), wobei (a1) jeweils mindestens ein Monomer aus der Gruppe bestehend aus olefinisch ungesättigten Monomeren (a11) mit mindestens einer hydrophilen Gruppe HG, aus der Gruppe bestehend aus olefinisch ungesättigten Monomeren (a12) mit mindestens Ligandengruppe A und aus der Gruppe bestehend aus olefinisch ungesättigten Monomeren (a13) mit mindestens einer vernetzenden Gruppe B, umfasst, und
b) mindestens einem vom olefinisch ungesättigten Monomer (a) verschiedenen olefinisch ungesättigten Monomer der allgemeinen Formel I
R¹R²C=CR³R⁴ (I),
worin die Reste R¹ R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, -Alkytaryl-, Cycloalkylaryl- Arylalkyl- oder Arylcycloalkylreste stehen, mit der Maßgabe, daß mindestens zwei der Variablen R¹ R² , R³ und R⁴ für substituierte oder unsubstituierte Aryl-, Arylalkyl- oder Arylcycloalkylreste, insbesondere substituierte oder unsubstituierte Arylreste, stehen.

4. Wässriges Beschichtungsmittel gemäß einem der Ansprüche 1 bis 3, **dadurch gekennzeichnet, daß** die Vernetzer V kovalent gebundene Liganden A aufweisen.

5. Wässriges Beschichtungsmittel gemäß einem der Ansprüche 1 bis 4, **dadurch gekennzeichnet, daß** die Liganden A ausgewählt sind aus der Gruppe Harnstoffe, Amine, Amide, Imine, Imide, Pyridine, Organoschwefelverbindungen, Organophosphorverbindungen, Organoborverbindungen, Oxime, Acetylacetonate, Polyalkohole, Säuren, Phytinsäuren, Acetylene und/oder Carbene.

6. Wässriges Beschichtungsmittel gemäß einem der Ansprüche 1 bis 5, **dadurch gekennzeichnet, daß** das Polymerisat P und der Vernetzer V vernetzende Gruppen B und/oder B' enthält, die thermisch und/oder strahlenvernetzbar sind.

7. Wässriges Beschichtungsmittel gemäß einem der Ansprüche 1 bis 6, **dadurch gekennzeichnet, daß** das Polymerisat P als Polymerrückgrat einen oder mehrere Bausteine ausgewählt aus der Gruppe Polyester, Polyacrylate, Polyurethane, Polyolefine, Polyalkohole, Polyvinylether, Polyvinylamine und Polyalkylenimine aufweist.

8. Wässriges Beschichtungsmittel gemäß einem der Ansprüche 1 bis 7, **dadurch gekennzeichnet, dass** es zusätzlich ein Salz, welches als kationischen Bestandteil Lanthanidmetallkationen und/oder d-Metallkationen, ausgenommen Chromkationen, aufweist, enthält.

## Claims

1. Aqueous coating material for metallic substrates, comprising a water-dispersible and/or watersoluble polymer P with a gradient in the concentration of covalently bonded hydrophilic groups along the polymer main chain, the polymer P having covalently bonded ligands A, which form chelates with the metal ions released during the corrosion of the substrate and/or with the substrate surface, and having crosslinking functional groups B, which with themselves, with further complementary functional groups B' of the polymer P and/or with further functional groups B and/or B' are able to form covalent bonds to crosslinkers V.

2. Aqueous coating material according to Claim 1, **characterized in that** the polymer P comprises at least one polymer which is prepared by free-radical polymerization of olefinically unsaturated monomers.

3. Aqueous coating material according to Claim 1 or 2, **characterized in that** the polymer P comprises at least one copolymer PM obtainable by the free-radical polymerization of
a) olefinically unsaturated monomers (a1) and (a2), (a1) comprising in each case at least one monomer from the group consisting of olefinically unsaturated monomers (a11) having at least one hydrophilic group HG, from the group consisting of olefinically unsaturated monomers (a12) having at least ligand group A, and from the group consisting of olefinically unsaturated monomers (a13) having at least one crosslinking group B, and
b) at least one olefinically unsaturated monomer which is different from the olefinically unsaturated monomer (a) and is of the general formula I
**R¹R²C=CR³R⁴** (I)
in which the radicals R¹, R², R³, and R⁹ each independently of one another are hydrogen atoms or substituted or unsubstituted alkyl, cycloalkyl, alkylcycloalkyl, cycloalkylalkyl, aryl, alkylaryl, cycloalkylaryl, arylalkyl or arylcycloalkyl radicals, with the proviso that at least two of the variables R¹, R², R³, and R⁴ are substituted or unsubstituted aryl, arylalkyl or arylcycloalkyl radicals, especially substituted or unsubstituted aryl radicals.

4. Aqueous coating material according to any one of Claims 1 to 3, **characterized in that** the crosslinkers V comprise covalently bonded ligands A.

5. Aqueous coating material according to any one of Claims 1 to 4, **characterized in that** the ligands A are selected from the group consisting of ureas, amines, amides, imines, imides, pyridines, organosulfur compounds, organophosphorus compounds, organoboron compounds, oximes, acetylacetonates, polyalcohols, acids, phytic acids, acetylenes and/or carbenes.

6. Aqueous coating material according to any one of Claims 1 to 5, **characterized in that** the polymer P and the crosslinker V comprise crosslinking groups B and/or B' which are crosslinkable thermally and/or by means of radiation.

7. Aqueous coating material according to any one of Claims 1 to 6, **characterized in that** the polymer P comprises as its backbone one or more building blocks selected from the group consisting of polyesters, polyacrylates, polyurethanes, polyolefins, polyalcohols, polyvinyl ethers, polyvinylamines and polyalkyleneimines.

8. Aqueous coating material according to any one of Claims 1 to 7, **characterized in that** it further comprises a salt which as its cationic constituent features lanthanide metal cations and/or d-metal cations, with the exception of chromium cations.

## Revendications

1. Agent de revêtement aqueux pour substrats métalliques contenant un polymère P dispersible et/ou soluble dans l'eau présentant un gradient de la concentration en groupes hydrophiles liés par covalence le long de la chaîne principale du polymère, où le polymère P présente des ligands A liés par covalence, qui forment des chélates avec les ions métalliques libérés lors de la corrosion du substrat et/ou avec la surface du substrat, ainsi que des groupes fonctionnels réticulants B, qui peuvent former des liaisons covalentes avec eux-mêmes, avec d'autres groupes fonctionnels complémentaires B' du polymère P et/ou avec d'autres groupes fonctionnels B et/ou B' sur des réticulants V.

2. Agent de revêtement aqueux selon la revendication 1, **caractérisé en ce que** le polymère P contient au moins un polymère, qui est préparé par polymérisation radicalaire de monomères oléfiniquement insaturés.

3. Agent de revêtement aqueux selon la revendication 1 ou 2, **caractérisé en ce que** le polymère P contient au moins un copolymère PM, pouvant être obtenu par polymérisation radicalaire de
a) monomères oléfiniquement insaturés (a1) et (a2), où (a1) comprend à chaque fois au moins un monomère du groupe constitué par des monomères oléfiniquement insaturés (a11) comprenant au moins un groupe hydrophile HG, du groupe constitué par les monomères oléfiniquement insaturés (a12) comprenant au moins un groupe ligand A et du groupe constitué par les monomères oléfiniquement insaturés (a13) comprenant au moins un groupe réticulant B, et
b) au moins un monomère oléfiniquement insaturé, différent du monomère (a) oléfiniquement insaturé, de formule générale I
R¹R²C=CR³R⁴ (I),
dans laquelle les radicaux R¹, R² R³ et R⁴ représentent, à chaque fois indépendamment l'un de l'autre, des atomes d'hydrogène ou des radicaux alkyle, cycloalkyle, alkylcycloalkyle, cycloalkylalkyle, aryle, alkylaryle, cycloalkylaryle, arylalkyle ou arylcycloalkyle, substitués ou non substitués, à condition qu'au moins deux des variables R¹ R² R³ et R⁴ représentent des radicaux aryle, arylalkyle ou arylcycloalkyle, substitués ou non substitués, en particulier des radicaux aryle substitués ou non substitués.

4. Agent de revêtement aqueux selon l'une quelconque des revendications 1 à 3, **caractérisé en ce que** les réticulants V présentent des ligands A liés par covalence.

5. Agent de revêtement aqueux selon l'une quelconque des revendications 1 à 4, **caractérisé en ce que** les ligands A sont choisis dans le groupe formé par les urées, les amines, les amides, les imines, les imides, les pyridines, les composés organosoufrés, les composés organophosphorés, les composés organoboriques, les oximes, les acétylacétonates, les polyalcools, les acides, les acides phytiques, les acétylènes et/ou les carbènes.

6. Agent de revêtement aqueux selon l'une quelconque des revendications 1 à 5, **caractérisé en ce que** le polymère P et le réticulant V contiennent des groupes réticulants B et/ou B', qui sont réticulables par voie thermique et/ou par des rayons.

7. Agent de revêtement aqueux selon l'une quelconque des revendications 1 à 6, **caractérisé en ce que** le polymère P présente, comme épine dorsale polymère, un ou plusieurs éléments choisis dans le groupe formé par les polyesters, les polyacrylates, les polyuréthanes, les polyoléfines, les polyalcools, les polyvinyléthers, les polyvinylamines et les polyalkylène-imines.

8. Agent de revêtement aqueux selon l'une quelconque des revendications 1 à 7, **caractérisé en ce qu'**il contient en outre un sel, qui présente comme constituant cationique des cations métalliques des lanthanides et/ou des cations métalliques d, à l'exception des cations de chrome.
